# EUROPEAN PATENT APPLICATION

(11) **EP 4 564 711 A1**
(43) Date of publication of application: **04.06.2025**
(21) Application number: 22952348.5
(22) Date of filing: 27.07.2022
(51) Int. Cl.: H04L 1/00

(54) **INFORMATION MONITORING METHOD AND APPARATUS, INFORMATION SENDING METHOD AND APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2022/108357
(87) International publication number: WO 2024/020886

(57) **Abstract**

Provided in the present disclosure are an information monitoring method and apparatus, an information sending method and apparatus, and a storage medium. The information monitoring method comprises: determining that a first time unit and a second time unit have at least one identical time symbol, wherein the first time unit is used by a terminal to monitor multi-cell downlink control information (MC-DCI), and the second time unit is used by the terminal to monitor legacy DCI; and monitoring at least one of the MC-DCI and the legacy DCI at least on the identical time symbol. In the present disclosure, when time units for monitoring legacy DCI and MC-DCI overlap in a time domain, a terminal can monitor at least one of the legacy DCI and the MC-DCI at least on an overlap time symbol, thereby ensuring that the understanding by the terminal is consistent with the understanding by a base station, facilitating the reduction in the monitoring complexity of the terminal, and improving the DCI scheduling performance.

## Description

### TECHNICAL FIELD

The present disclosure relates to the field of communications, and in particular, to information monitoring, information sending methods and apparatuses, and storage medium.

### BACKGROUND

The 5th Generation Mobile Communication Technology (5G) New Radio (NR) technology works in a relatively wide spectrum range. With the re-farming of the frequency domain band corresponding to the existing cellular network, the utilization of the corresponding spectrum will steadily increase. However, for frequency range 1 (FR1), the available frequency domain resources are gradually fragmented. In order to meet different spectrum needs, these dispersed spectrum resources need to be utilized with relatively high spectrum, power efficiency and a relatively flexible way to achieve a relatively high network throughput and good coverage.

Based on the relevant mechanism, one piece of downlink control information (DCI) in the existing serving cell only allows scheduling data of one cell. With the gradual fragmentation of frequency resources, the demand for scheduling data from multiple cells at the same time will gradually increase. Therefore, DCI for scheduling data from multiple cells needs to be introduced. This type of DCI may be expressed as Multi-Cell DCI (MC-DCI).

If legacy DCI and MC-DCI are scheduled in the same time unit, or the time units in which legacy DCI and MC DCI are scheduled partially overlap, the DCI processing capability of the terminal may be exceeded, and the terminal cannot simultaneously implement simultaneous analysis of legacy DCI and MC-DCI, which damages the scheduling performance of DCI.

### SUMMARY

In order to overcome problems existing in the related art, embodiments of the present disclosure provide an information monitoring, information sending methods and apparatuses, and a storage medium.

According to a first aspect of the embodiments of the present disclosure, an information monitoring method is provided. The method is executed by a terminal and includes:
determining that at least one same time symbol exists between a first time unit and a second time unit; where the first time unit is used for the terminal to monitor multi-cell downlink control information (MC-DCI), and the second time unit is used for the terminal to monitor DCI;
monitoring at least one of the MC-DCI and the legacy DCI at least on the same time symbol.

Optionally, the method further includes at least one of:
based on a protocol agreement, determining that the terminal monitors one or two of the MC-DCI and the legacy DCI at least on the same time symbol;
receiving a first signaling sent by a base station, and determining that the terminal monitors one or two of the MC-DCI and the legacy DCI at least on the same time symbol;
based on a physical downlink control channel (PDCCH) monitoring capability of the terminal, determining that the terminal monitors one or two of the MC-DCI and the legacy DCI at least on the same time symbol.

Optionally, the PDCCH monitoring capability includes at least one of:
supporting monitoring at least one format of the MC-DCI;
supporting monitoring the MC-DCI and the legacy DCI simultaneously in a same search space (SS);
supporting monitoring the MC-DCI and the legacy DCI simultaneously in different SSs.

Optionally, the PDCCH monitoring capability includes at least one of:
under a frequency division multiplexing (FDD) system, supporting a maximum number of DCI formats monitored in each time unit on a single scheduled carrier to be greater than 2;
under a time division multiplexing (TDD) system, supporting a maximum number of DCI formats monitored in each time unit on a single scheduled carrier to be greater than 3.

Optionally, determining that the terminal monitors one of the MC-DCI and the legacy DCI at least on the same time symbol includes:
based on DCI association information, determining DCI that the terminal monitors at least on the same time symbol.

Optionally, the DCI association information is any of:
an SS configuration cycle when monitoring DCI;
a number of continuous slots for monitoring the DCI in each of the SS configuration cycle.

Optionally, determining the DCI that the terminal monitors at least on the same time symbol based on the DCI association information includes any of:
in a case that an SS configuration cycle corresponding to the MC-DCI is greater than an SS configuration cycle corresponding to the legacy DCI, determining that the terminal monitors the MC-DCI on the first time unit;
in a case that the SS configuration cycle corresponding to the MC-DCI is less than or equal to the SS configuration cycle corresponding to the legacy DCI, determining that the terminal monitors the legacy DCI on the second time unit;
in a case that a number of continuous slots for monitoring the DCI within the SS configuration cycle corresponding to the MC-DCI is less than a number of continuous slots for monitoring the DCI within the SS configuration cycle corresponding to the legacy DCI, determining that the terminal monitors the MC-DCI on the first time unit;
in a case that the number of continuous slots for monitoring the DCI within the SS configuration cycle corresponding to the MC-DCI is greater than or equal to the number of continuous slots for monitoring the DCI within the SS configuration cycle corresponding to the legacy DCI, determining that the terminal monitors the legacy DCI on the second time unit.

Optionally, determining that the terminal monitors two of the MC-DCI and the legacy DCI on the same time symbol based on the protocol agreement, includes:
in response to the terminal satisfying a first condition on the same time symbol, determining that the terminal monitors the MC-DCI on the first time unit and monitors the legacy DCI on the second time unit.

Optionally, the method further includes;
in response to the terminal not satisfying a first condition on the same time symbol, determining that the terminal monitors one of the MC-DCI and the legacy DCI at least on the same time symbol.

Optionally, the first condition includes at least one of:
a number of DCI format configured for the terminal is within a range of the PDCCH monitoring capability of the terminal;
a number of SS configured for the terminal is less than or equal to a first number;
a number of size of DCI configured for the terminal satisfies a preset restriction condition corresponding to the size;
a number of blind detection (BD) configured for the terminal is less than or equal to a second number;
a number of CCE configured for the terminal is less than or equal to a third number.

According to a second aspect of the embodiments of the present disclosure, an information sending method is provided. The method is executed by a base station and includes:
determining that at least one same time symbol exists between a first time unit and a second time unit; where the first time unit is used for a terminal to monitor multi-cell downlink control information (MC-DCI), and the second time unit is used for the terminal to monitor legacy DCI; and
determining to send at least one of the MC-DCI and the legacy DCI to the terminal at least on the same time symbol.

Optionally, the method further includes:
sending a first signaling to the terminal; where the first signaling is used for instructing the terminal to monitor one or two of the MC-DCI and the legacy DCI at least on the same time symbol;
determining to send at least one of the MC-DCI and the legacy DCI to the terminal at least on the same time symbol includes:
based on the first signaling, determining that the base station sends one or two of the MC-DCI and the legacy DCI to the terminal at least on the same time symbol.

Optionally, determining to send at least one of the MC-DCI and the legacy DCI to the terminal at least on the same time symbol includes any of:
based on a protocol agreement, determining that the base station sends one or two of the MC-DCI and the legacy DCI to the terminal at least on the same time symbol;
based on a PDCCH detection capability reported by the terminal, determining that the base station sends one or two of the MC-DCI and the legacy DCI to the terminal at least on the same time symbol.

Optionally, the PDCCH monitoring capability includes at least one of:
supporting monitoring at least one format of MC-DCI;
supporting monitoring the MC-DCI and the legacy DCI simultaneously in a same search space (SS);
supporting monitoring the MC-DCI and the legacy DCI simultaneously in different SSs.

Optionally, the PDCCH monitoring capability includes at least one of:
under a frequency division multiplexing (FDD) system, supporting a maximum number of DCI formats monitored in each time unit on a single scheduled carrier to be greater than 2;
under a time division multiplexing (TDD) system, supporting a maximum number of DCI formats monitored in each time unit on a single scheduled carrier to be greater than 3.

Optionally, determining that the base station sends one of the MC-DCI and the legacy DCI to the terminal at least on the same time symbol includes:
based on DCI association information, determining DCI sent by the base station to the terminal at least on the same time symbol.

Optionally, the DCI association information is any of:
an SS configuration cycle when monitoring the DCI;
a number of continuous slots for monitoring the DCI within each of the SS configuration cycle.

Optionally, determining the DCI sent by the base station to the terminal at least on the same time symbol based on the DCI association information includes any of:
in a case that an SS configuration cycle corresponding to the MC-DCI is greater than an SS configuration cycle corresponding to the legacy DCI, determining that the base station sends the MC-DCI to the terminal on the first time unit;
in a case that the SS configuration cycle corresponding to the MC-DCI is less than or equal to the SS configuration cycle corresponding to the legacy DCI, determining that the base station sends the legacy DCI to the terminal on the second time unit;
in a case that a number of continuous slots for monitoring the DCI within the SS configuration cycle corresponding to the MC-DCI is less than a number of continuous slots for monitoring the DCI within the SS configuration cycle corresponding to the legacy DCI, determining that the base station sends the MC-DCI to the terminal on the first time unit;
in a case that the number of continuous slots for monitoring the DCI within the SS configuration cycle corresponding to the MC-DCI is greater than or equal to the number of continuous slots for monitoring the DCI within the SS configuration cycle corresponding to the legacy DCI, determining that the base station sends the legacy DCI to the terminal on the second time unit.

Optionally, determining that the base station sends two of the MC-DCI and the legacy DCI to the terminal at least on the same time symbol based on the protocol agreement, includes:
in response to determining that the terminal satisfies a first condition on the same time symbol, determining that the base station sends the MC-DCI to the terminal on the first time unit, and sends the legacy DCI to the terminal on the second time unit.

Optionally, the method further includes:
in response to determining that the terminal does not satisfy a first condition on the same time symbol, determining that the base station sends one of the MC-DCI and the legacy DCI to the terminal at least on the same time symbol.

Optionally, the first condition includes at least one of:
a number of DCI format configured for the terminal is within a capability range of monitoring PDCCH of the terminal;
a number of SS configured for the terminal is less than or equal to a first number;
a number of size of DCI configured for the terminal satisfies a preset restriction condition corresponding to the size;
a number of blind detection (BD) configured for the terminal is less than or equal to a second number;
a number of CCE configured for the terminal is less than or equal to a third number.

According to a third aspect of the embodiments of the present disclosure, an information monitoring apparatus is provided. The apparatus is applied to a terminal and includes:
a first determination module, configured to determine that at least one same time symbol exists between a first time unit and a second time unit; where the first time unit is used for the terminal to monitor multi-cell downlink control information (MC-DCI), and the second time unit is used for the terminal to monitor legacy DCI; and
a monitoring module, configured to monitor at least one of the MC-DCI and the legacy DCI at least on the same time symbol.

According to a fourth aspect of the embodiments of the present disclosure, an information sending apparatus is provided. The apparatus is applied to a base station and includes:
a second determination module, configured to determine that at least one same time symbol exists between a first time unit and a second time unit; where the first time unit is used for the terminal to monitor multi-cell downlink control information (MC-DCI), and the second time unit is used for the terminal to monitor legacy DCI; and
a third determination module, configured to determine to send at least one of the MC-DCI and the legacy DCI to the terminal at least on the same time symbol.

According to a fifth aspect of the embodiments of the present disclosure, a computer-readable storage medium is provided, the storage medium stores a computer program, and the computer program is configured to execute any one of the above information monitoring methods.

According to a sixth aspect of the embodiments of the present disclosure, a computer-readable storage medium is provided, the storage medium stores a computer program, and the computer program is configured to execute any one of the above information sending methods.

According to a seventh aspect of the embodiments of the present disclosure, an information monitoring apparatus is provided, including:
a processor; and
a memory configured to store instructions executable by the processor;
where the processor is configured to execute any one of the above information monitoring methods.

According to an eighth aspect of the embodiments of the present disclosure, an information sending apparatus is provided, including:
a processor; and
a memory configured to store instructions executable by the processor;
where the processor is configured to execute any one of the above information sending methods.

The technical solutions provided by the embodiments of the present disclosure may include the following beneficial effects.

In the embodiments of the present disclosure, when the terminal determines that there is at least one same time symbol between the first time unit and the second time unit, it can monitor at least one of the MC-DCI and the legacy DCI on at least the same time symbol. The first time unit is used for the terminal to monitor multi-cell downlink control information (MC-DCI), and the second time unit is used for the terminal to monitor legacy DCI. In the present disclosure, when the time units for monitoring the legacy DCI and the MC-DCI overlap in the time domain, the terminal can monitor at least one of the legacy DCI and the MC-DCI at least on the overlapping time symbols to ensure the consistent understanding between the terminal and the base station, which helps reduce the monitoring complexity of the terminal and improves the scheduling performance of DCI.

It should be understood that the above general description and the following detailed description are only exemplary and explanatory, and do not limit the embodiments of the present disclosure.

### BRIEF DESCRIPTION OF THE DRAWINGS

The accompanying drawings, which are incorporated in and constitute a part of this specification, illustrate the embodiments consistent with the present disclosure, and together with the specification, serve to explain the principles of the present disclosure.
FIG. 1 is a schematic diagram illustrating a collision scenario between MC-DCI and legacy DCI in the time domain according to an exemplary embodiment.
FIG. 2A is a schematic flowchart of an information monitoring method according to an exemplary embodiment.
FIG. 2B is a schematic diagram illustrating a collision scenario between MC-DCI and legacy DCI in the time domain according to an exemplary embodiment.
FIG. 2C is a schematic diagram illustrating another collision scenario between MC-DCI and legacy DCI in the time domain according to an exemplary embodiment.
FIG. 3 is a schematic flowchart of another information monitoring method according to an exemplary embodiment.
FIG. 4 is a schematic flowchart of another information monitoring method according to an exemplary embodiment.
FIG. 5 is a schematic flowchart of an information sending method according to an exemplary embodiment.
FIG. 6 is a schematic flowchart of another information sending method according to an exemplary embodiment.
FIG. 7 is a schematic flowchart of another information sending method according to an exemplary embodiment.
FIG. 8A is a schematic diagram of a scenario in which one type of DCI is monitored when MC-DCI and legacy DCI collide in the time domain according to an exemplary embodiment.
FIG. 8B is a schematic diagram of a scenario in which two types of DCI are monitored when MC-DCI and legacy DCI collide in the time domain according to an exemplary embodiment.
FIG. 9 is a block diagram of an information monitoring apparatus according to an exemplary embodiment.
FIG. 10 is a block diagram of an information sending apparatus according to an exemplary embodiment.
FIG. 11 is a schematic structural diagram of an information monitoring apparatus according to an exemplary embodiment of the present disclosure.
FIG. 12 is a schematic structural diagram of an information sending apparatus according to an exemplary embodiment of the present disclosure.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the embodiments of the present disclosure. Rather, they are merely examples of apparatuses and methods consistent with some aspects of the present disclosure as detailed in the appended claims.

The terms used in the present disclosure are for the purpose of describing specific embodiments only and are not intended to limit the present disclosure. As used in the present disclosure and the appended claims, the singular forms "a/an," "said" and "the" are intended to include the plural forms as well, unless the context clearly dictates otherwise. It should also be understood that the term "and/or" as used herein refers to and includes any or all possible combinations of at least one of the associated listed items.

It should be understood that although the terms first, second, third, etc. may be used to describe various information in the present disclosure, the information should not be limited to these terms. These terms are only used to distinguish information of the same type from each other. For example, without departing from the scope of the present disclosure, the first information may also be called second information, and similarly, the second information may also be called first information. Depending on the context, the word "if" as used herein may be interpreted as "when" or "upon" or "in response to determining."

In the embodiments of the present disclosure, MC-DCI refers to DCI used to schedule data transmission of multiple cells. As the number of cells scheduled by MC-DCI increases, the scheduling information further increases, and the number of bits occupied by MC-DCI may increase as the number of scheduled cells increases. Based on the limitation of existing polar codes, the DCI size cannot exceed 140 bits. The limitation of the DCI size reduces the scheduling flexibility of MC-DCI.

Based on related mechanisms, the number of DCI formats that a terminal can monitor within one time unit is limited. The specific restrictions are as follows.

In a Frequency Division Duplexing (FDD) system, the terminal can monitor at most one downlink (DL) DCI and one Uplink (UL) DCI on a single scheduled component carrier (CC) within a single duration (span).

In a Time Division Duplexing (TDD) system, the terminal can monitor at most one DL DCI and two UL DCIs or at most two DL DCIs and one UL DCI on a single scheduled CC within a single span.

Ideally, the number of DCI formats configured on each span and scheduled CC meeting the above restriction can be ensured by scheduling of the base station. However, the introduction of MC-DCI has added great challenges to the implementation of scheduling of the base station. The introduction of MC-DCI has increased the number of DCI formats that the base station can configure. At the same time, the scheduling flexibility of MC-DCI also limits the scheduling of MC-DCI by the base station.

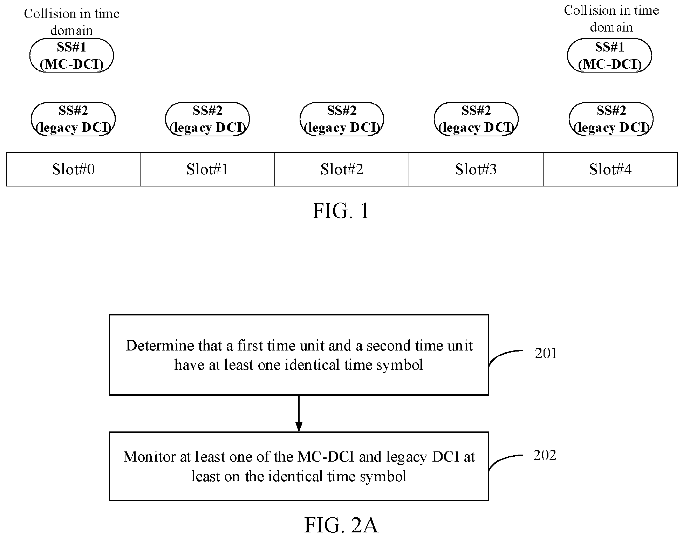

For example, as shown in FIG. 1, the identity of the search space (SS) corresponding to MC-DCI is 1, the identity of the SS corresponding to legacy DCI is 2, scheduling is performed in the first three time symbols of the slot, the configuration cycle of SS#1 is 5 slots, and the configuration cycle of SS#2 is 1 slot. On slot#0, slot#4, ..., SS#1 and SS#2 correspond to the same span.

If legacy and MC-DCI are scheduled on the same span or spans that overlap in the time domain, it may exceed the processing capability of the terminal for DCI and damage the scheduling performance of DCI. In order to solve this technical problem, the present disclosure provides the following information monitoring, information sending methods and apparatuses, and storage medium to avoid reducing the scheduling performance of DCI and achieve high availability.

Next, the information monitoring method provided by the present disclosure is introduced from the terminal side.

An embodiment of the present disclosure provides an information monitoring method. Referring to FIG. 2A, FIG. 2A is a flowchart of an information monitoring method according to an embodiment. The method may be executed by a terminal. The method may include the following steps.

In step 201, it is determined that at least one same time symbol exists between a first time unit and a second time unit.

In the embodiments of the present disclosure, the first time unit is used for the terminal to monitor multi-cell downlink control information (MC-DCI), and the second time unit is used for the terminal to monitor legacy DCI. MC-DCI refers to the DCI used to schedule data transmission of multiple cells, where the data transmission of each scheduled cell corresponds to one physical downlink shared channel (PDSCH) and/or corresponds to one physical uplink shared channel (PUSCH). The legacy DCI refers to the DCI agreed in a relevant protocol, including but not limited to DCI defined in version 15, version 16, and version 17.

The time unit may be a symbol, a slot, a frame or a span, which is not limited in the present disclosure. For example, the first time unit is the first slot, and the second time unit is the second slot. For another example, the first time unit is the first span, and the second time unit is the second span.

It should be noted that one span includes multiple consecutive time symbols belonging to the same slot, and the terminal monitors the Physical Downlink Control Channel (PDCCH) on the span.

In the embodiments of the present disclosure, the existence of at least one same time symbol between the first time unit and the second time unit may mean that the first time unit and the second time unit completely overlap in the time domain. At this time, the time symbols included in the two time units are the same.

Alternatively, the existence of at least one same time symbol between the first time unit and the second time unit may mean that the first time unit and the second time unit partially overlap in the time domain, that is, among the time symbols included in the two time units, some of the time symbols are the same.

The above time symbol may be an orthogonal frequency division multiplexing symbol (OFDM symbol), and subsequent time symbols or symbols refer to the OFDM symbol.

In step 202, at least one of the MC-DCI and the legacy DCI is monitored at least on the same time symbol.

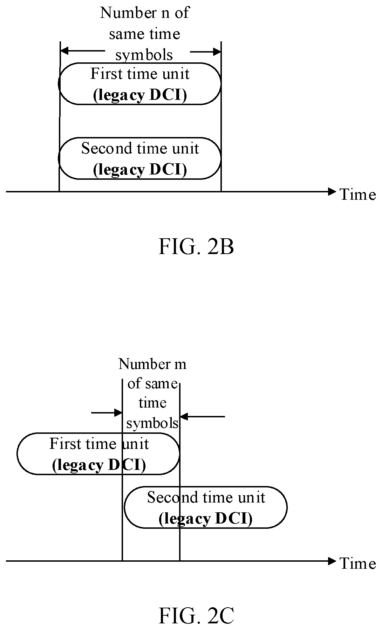

In the embodiments of the present disclosure, when the first time unit and the second time unit completely overlap in the time domain, the same time symbols are all symbols included in the first time unit or the second time unit, for example, as shown in FIG. 2B.

When the first time unit and the second time unit partially overlap in the time domain, the same time symbol includes the symbol(s) of the overlapping portion of the two time units, for example, as shown in FIG. 2C.

In the embodiments of the present disclosure, the terminal may monitor one or both of the MC-DCI and the legacy DCI according to a predefined rule at least on at least one same time symbols mentioned above.

In a possible implementation, when the terminal monitors one of the MC-DCI and the legacy DCI on the same time symbol, correspondingly, the terminal may monitor the MC-DCI on the first time unit, or the terminal may monitor the legacy DCI on the second time unit.

In another possible implementation, when the terminal monitors both the MC-DCI and the legacy DCI on the same time symbol, the terminal may monitor the MC-DCI on the first time unit, and monitor the legacy DCI on the second time unit.

In the above embodiment, it is possible to ensure that the terminal and the base station have consistent understanding, which is beneficial to reducing the monitoring complexity of the terminal and improving the scheduling performance of DCI.

At least on the above same time symbol, the terminal can monitor one or two of the MC-DCI and the legacy DCI. The specific methods are as follows.

In the first method: the terminal may monitor one of the MC-DCI and the legacy DCI at least on the same time symbol.

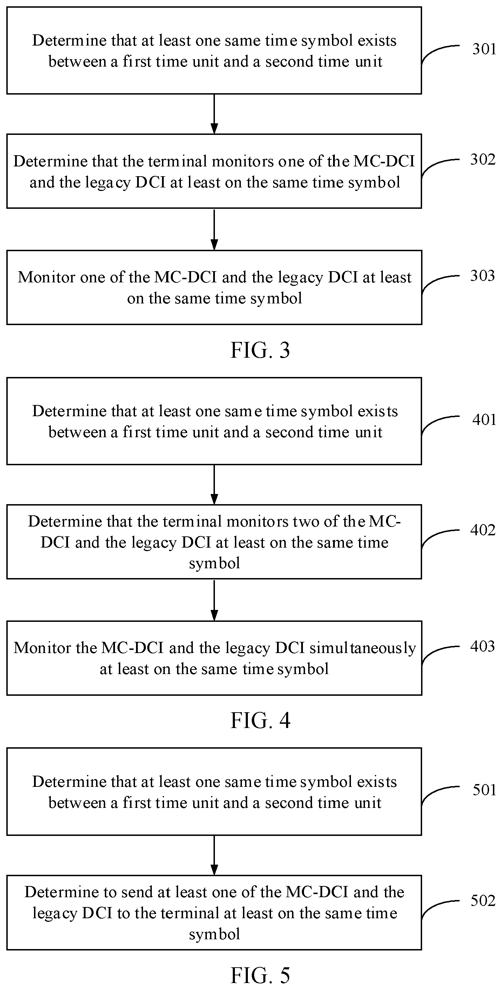

Referring to FIG. 3, FIG. 3 is a flowchart of an information monitoring method according to an embodiment, which may be executed by a terminal. The method may include the following steps.

In step 301, it is determined that at least one same time symbol exists between a first time unit and a second time unit.

In the embodiments of the present disclosure, the first time unit is used for the terminal to monitor multi-cell downlink control information (MC-DCI), and the second time unit is used for the terminal to monitor legacy DCI. The MC-DCI refers to DCI used to schedule data transmission of multiple cells, where the data transmission of each scheduled cell corresponds to one PDSCH and/or one PUSCH. The legacy DCI refers to the DCI agreed in the relevant protocol, including but not limited to DCI defined in version 15, version 16, and version 17.

The time unit may be a symbol, a slot, a frame or a span, which is not limited in the present disclosure.

It should be noted that one span includes multiple consecutive time symbols belonging to the same slot, and the terminal monitors the PDCCH on the span.

In the embodiments of the present disclosure, the existence of at least one same time symbol between the first time unit and the second time unit may mean that the first time unit and the second time unit are the same time unit. In this case, the time symbols included in the two time units are all the same.

Alternatively, the existence of at least one same time symbol between the first time unit and the second time unit may mean that the first time unit and the second time unit partially overlap in the time domain, that is, part of the time symbols included in the two time units are the same.

In step 302, it is determined that the terminal monitors one of the MC-DCI and the legacy DCI at least on the same time symbol.

In the embodiments of the present disclosure, when the first time unit and the second time unit completely overlap in the time domain, the same time symbols are all symbols included in the first time unit or the second time unit.

When the first time unit and the second time unit partially overlap in the time domain, the same time symbol includes a symbol(s) of the overlapping portion of the two time units.

In a possible implementation, the terminal directly determines, based on the protocol agreement, that the terminal monitors one of the MC-DCI and the legacy DCI at least on the same time symbol. Furthermore, it may be agreed through a protocol that the terminal monitors the MC-DCI or the legacy DCI, so that the terminal can subsequently determine the type of DCI to monitor and drop monitoring the other type of DCI.

For example, in order to reduce the impact of multi-cell data scheduling on the legacy DCI as much as possible, and considering that the overhead of monitoring the MC-DCI is large and the transmission performance of the MC-DCI is low, it can be agreed through the protocol that when there is at least one same time symbol between the first time unit and the second time unit, the terminal can only monitor the legacy DCI and give up monitoring the MC-DCI at least on the same time symbol. The terminal only monitors the legacy DCI on the second time unit and drops monitoring the MC-DCI.

For example, if monitoring MC-DCI is dropped, the data transmission of multiple scheduled cells may be affected. It may be agreed through a protocol that the terminal monitors the MC-DCI at least on the same time symbol and drops monitoring the legacy DCI. The terminal only monitors the MC-DCI on the first time unit and drops monitoring the legacy DCI.

In another possible implementation, the terminal may determine that the terminal monitors one of the MC-DCI and the legacy DCI at least on the same time symbol based on the instruction of the first signaling sent by the base station.

Specifically, the first signaling may instruct the terminal to monitor the MC-DCI or the legacy DCI, so that the terminal can subsequently determine the type of DCI to monitor and drop monitoring the other type of DCI.

The base station may consider the scheduling needs of different terminals and flexibly schedule the terminal to monitor one of the MC-DCI and the legacy DCI at least on the same time symbol through the first signaling, which provides high flexibility and availability.

For example, in order to reduce the impact of multi-cell data scheduling on the legacy DCI as much as possible, and considering that the overhead of scheduling MC-DCI on the base station side is large and the transmission performance of the MC-DCI is low, the base station may instruct the terminal to monitor the legacy DCI using the first signaling, then the terminal can only monitor the legacy DCI at least on the same time symbol, that is, the terminal only monitors the legacy DCI on the second time unit and drops monitoring the MC-DCI.

For example, the base station considers that if the terminal drops monitoring the MC-DCI, the data transmission of multiple scheduled cells will be affected. To reduce the impact on data transmission of multiple cells, the base station may instruct the terminal through the first signaling to monitor the MC-DCI, then the terminal can only monitor the MC-DCI at least on the same time symbol, that is, the terminal only monitors the MC-DCI on the first time unit and drops monitoring the legacy DCI.

In another possible implementation, the terminal may determine that the terminal monitors one of the MC-DCI and the legacy DCI at least on the same time symbol based on the PDCCH monitoring capability of the terminal.

The PDCCH monitoring capability may include but is not limited to at least one of the following: supporting monitoring at least one format of MC-DCI; supporting monitoring the MC-DCI and the legacy DCI simultaneously in the same search space (SS); supporting monitoring the MC-DCI and the legacy DCI simultaneously in different SSs.

The format corresponding to the MC-DCI includes, but is not limited to, a first format used for scheduling PUSCHs of multiple cells, and/or a second format used for scheduling PDSCHs of multiple cells. The first format may be expressed as format0_3, and the second format may be expressed as format1_3. Supporting monitoring at least one format of MC-DCI may mean that the terminal supports monitoring at least one of the first format and the second format.

The legacy DCI includes but is not limited to format0_1 and/or format1_1 in the related mechanisms.

Correspondingly, supporting monitoring the MC-DCI and the legacy DCI simultaneously in the same search space (SS) may refer to supporting simultaneously monitoring any combination of format0_3 and/or format1_3 of the MC-DCI and format0_1 and/or format1_1 of the legacy DCI in the same SS.

Correspondingly, supporting monitoring the MC-DCI and the legacy DCI simultaneously in different SSs may refer to supporting simultaneously monitoring any combination of format0_3 and/or format1_3 of the MC-DCI and format0_1 and/or format1_1 of the legacy DCI in different SSs.

The PDCCH monitoring capability may include but is not limited to at least one of the following: under a frequency division multiplexing (FDD) system, supporting the maximum number of DCI formats monitored in each time unit on a single scheduled carrier to be greater than 2; under a time division multiplexing (TDD) system, supporting the maximum number of DCI formats monitored in each time unit on a single scheduled carrier to be greater than 3.

In the embodiments of the present disclosure, considering that the terminal supporting multi-cell data scheduling in R18 is a strong-capability terminal, the capability of the terminal to monitor the PDCCH can be relaxed based on relevant mechanisms. Specifically, in the FDD system, the maximum DCI format that the terminal can monitor on a single scheduled CC within a single span is greater than one DL DCI and/or greater than one UL DCI.

For example, the number of DCIs monitored by the terminal is one DL DCI and two UL DCIs, or two DL DCIs and one UL DCI, that is, supporting that the maximum number of DCI formats monitored in each time unit on a single scheduled carrier is greater than 2.

In the TDD system, it is supported that the maximum number of DCI formats monitored in each time unit on a single scheduled carrier is greater than 3. For example, the number of DCIs monitored by the terminal is two DL DCIs and two UL DCIs.

In the embodiments of the present disclosure, the terminal may determine to monitor one of the MC-DCI and the legacy DCI at least on the same time symbol based on the above-mentioned PDCCH monitoring capability.

For example, when the terminal supports monitoring at least one format of MC-DCI, the terminal may determine to monitor the MC-DCI at least on the same time symbol. Correspondingly, the terminal monitors the MC-DCI on the time symbols included in the first time unit and drops monitoring the legacy DCI.

For example, when the terminal does not support monitoring the MC-DCI and the legacy DCI in the same SS simultaneously, the terminal determines to only monitor the MC-DCI or the legacy DCI in the same SS.

For example, when the terminal supports monitoring the MC-DCI and the legacy DCI in different SSs simultaneously, the terminal can monitor the MC-DCI in SS#1 and the legacy DCI in SS#2.

For example, under the FDD system, the maximum number of DCI formats monitored in each time unit on a single scheduled carrier supported by the terminal is 3. For example, the number of DCI monitored by the terminal is two DL DCI and one UL DCI, or, the number of DCI monitored by the terminal is one DL DCI and two UL DCIs. The number of DCI formats including MC DCI and legacy DCI that the terminal monitors meets the restriction, that is, the number of DCI formats is 3. The terminal monitors two types of DCI simultaneously. If the number of DCI formats is greater than 3, it chooses to drop monitoring of the MC-DCI or part of the legacy DCI, for example, drop monitoring of format 0_1 or 1_1. Similarly, under the TDD system, the way in which the terminal determines to monitor one type or two types of DCI on the same time symbol is similar to that in the FDD system, which will not be described again here.

This is only an exemplary explanation. The terminal can flexibly select one of the MC-DCI and the legacy DCI for monitoring based on its own PDCCH monitoring capability. The specific implementation is not limited in the present disclosure.

In another possible implementation, in combination with the above at least two items, the terminal may determine that the terminal monitors one of the MC-DCI and the legacy DCI at least on the same time symbol, and determines to specifically monitor the MC-DCI or the legacy DCI.

When the PDCCH monitoring capability indicates that the terminal supports monitoring at least one format of MC-DCI, it is determined that the terminal monitors at least one of the MC-DCI and the legacy DCI on the same time symbol. At this time, the terminal may directly determine that the terminal monitors the MC-DCI on the same time symbol, or the terminal may, based on the terminal supporting the above-mentioned PDCCH monitoring capability, and further based on the protocol agreement or the instruction of the first signaling, determine that the terminal monitors the MC-DCI or the legacy DCI at least on the same time symbol, which is not limited by the present disclosure.

Correspondingly, the terminal can monitor the MC-DCI on the first time unit and drop monitoring the legacy DCI. Alternatively, the terminal can monitor the legacy DCI on the second time unit and drop monitoring the MC-DCI.

When the PDCCH monitoring capability indicates that the terminal does not support monitoring the MC-DCI and the legacy DCI simultaneously in the same SS, or the PDCCH monitoring capability indicates that the terminal does not support monitoring the MC-DCI and the legacy DCI simultaneously in different SSs, it is determined that the terminal monitors one of the MC-DCI and the legacy DCI at least on the same time symbol. At this time, it can be determined based on the protocol agreement or the instruction of the first signaling that the terminal monitors the MC-DCI on the first time unit and drops monitoring the legacy DCI, or determined that the terminal monitors the legacy DCI on the second time unit and drops monitoring the MC-DCI, which is not limited by the present disclosure.

When the PDCCH monitoring capability indicates that the terminal supports monitoring the MC-DCI and the legacy DCI simultaneously in the same SS, or the PDCCH monitoring capability indicates that the terminal supports monitoring the MC-DCI and the legacy DCI simultaneously in different SSs, the terminal has the ability to monitor the MC-DCI and the legacy DCI, but other condition is not met. For example, combined with the terminal capability, it is determined that the terminal can only monitor one of the MC-DCI and the legacy DCI on the same time symbol element.

For example, when the configured number of DCI formats and number of SSs exceed the terminal capability, it is determined that the terminal monitors one of the MC-DCI and the legacy DCI at least on the same time symbol. At this time, based on the protocol agreement or the instruction of the first signaling, it can be determined that the terminal monitors the MC-DCI on the first time unit and drops monitoring the legacy DCI, or it can be determined that the terminal monitors the legacy DCI on the second time unit and drops monitoring the MC-DCI.

In another possible implementation, in the case that the terminal determines that the terminal monitors one of the MC-DCI and the legacy DCI on the same time symbol, the terminal may also determine the specific DCI type that the terminal monitors at least on the same time symbol based on DCI association information.

In the embodiments of the present disclosure, the DCI association information is relevant information when monitoring DCI, including but not limited to any of the following: an SS configuration cycle when monitoring DCI; the number of continuous slots for monitoring DCI in each SS configuration cycle.

In addition, the DCI association information may also include any of the following: the number of time symbols for configuring the control resource set (CORESET); a frequency domain range for configuring the CORESET. The DCI association information in the present disclosure may also include the above-mentioned number of configured DCI formats, number of SSs, etc., and any information related to monitoring DCI should fall within the protection scope of the present disclosure.

For example, the protocol stipulates that the terminal monitors one of the MC-DCI and the legacy DCI on the same time symbol. At this time, the terminal can determine to monitor the MC-DCI or the legacy DCI at least on the same time symbol based on the DCI association information.

For example, the first signaling instructs the terminal to monitor one of the MC-DCI and the legacy DCI at least on the same time symbol. At this time, the terminal can determine to monitor the MC-DCI or the legacy DCI at least on the same time symbol based on the DCI association information.

For example, the terminal determines to monitor at least one of the MC-DCI and the legacy DCI on the same time symbol based on the PDCCH monitoring capability. At this time, the terminal can also determine to monitor the MC-DCI or the legacy DCI at least on the same time symbol based on the DCI association information.

Based on the DCI association information, the manner of determining one type of DCI that the terminal monitors at least on the same time symbol is as follows.

In the first manner: considering that when the SS configuration cycle is relatively large, the corresponding DCI transmission density is relatively small, the terminal only monitors the DCI corresponding to the SS configuration with a relatively large SS configuration cycle.

Correspondingly, in the case that the SS configuration cycle of the SS corresponding to the MC-DCI is greater than the SS configuration cycle of the SS corresponding to the legacy DCI, it is determined that the terminal monitors the MC-DCI at least on the same time symbol.

In the case that the SS configuration cycle of the SS corresponding to the MC-DCI is less than or equal to the SS configuration cycle of the SS corresponding to the legacy DCI, it is determined that the terminal monitors the legacy DCI at least on the same time symbol.

In the second manner, considering that when the number of SS continuous slots is relatively small, the corresponding DCI transmission density is relatively small, the terminal can only monitor the DCI monitored in the corresponding SS configuration with a relatively small number of SS continuous slots.

Correspondingly, in the case that the number of continuous slots for monitoring DCI in each SS configuration cycle corresponding to the MC-DCI is less than the number of continuous slots for monitoring DCI in each SS configuration cycle corresponding to the legacy DCI, it is determined that the terminal monitors the MC-DCI at least on the same time symbol.

In the case that the number of continuous slots for monitoring DCI in each SS configuration cycle corresponding to the MC-DCI is greater than or equal to the number of continuous slots for monitoring DCI in each SS configuration cycle corresponding to the legacy DCI, it is determined that the terminal monitors the legacy DCI at least on the same time symbol.

In the third manner, considering that if the number of continuous symbols or the frequency domain resource range of CORESET is larger, the corresponding resources occupied by DCI transmission may be more. Therefore, the terminal only monitors the DCI with a large number of corresponding continuous symbols of CORESET or with a large corresponding frequency domain resource range occupied by CORESET. The monitoring DCI is based on SS configuration, and the SS configuration is associated with the CORESET.

Correspondingly, in the case that the number of continuous symbols or the frequency domain resource range of CORESET corresponding to the MC-DCI is smaller than the number of continuous symbols or the frequency domain resource range of CORESET corresponding to the legacy DCI, it is determined that the terminal monitors the legacy DCI at least on the same time symbol.

In the case that the number of continuous symbols or the frequency domain resource range of CORESET corresponding to the MC-DCI is greater than or equal to the number of continuous symbols or the frequency domain resource range of CORESET corresponding to the legacy DCI, it is determined that the terminal monitors the MC-DCI at least on the same time symbol.

In step 303, one of the MC-DCI and the legacy DCI is monitored at least on the same time symbol.

In the embodiments of the present disclosure, the terminal may determine the monitored DCI type based on step 302, and thereby monitor according to the determined DCI type on the same time symbol.

Correspondingly, when the terminal determines to monitor the MC-DCI at least on the same time symbol, the terminal may monitor the MC-DCI on all time symbols included in the first time unit.

If the terminal determines to monitor the legacy DCI at least on the same time symbol, the terminal may monitor the legacy DCI on all time symbols included in the second time unit.

In the above embodiment, when the time units for monitoring the legacy DCI and the MC-DCI overlap in the time domain, the terminal can monitor the MC-DCI in the first time unit or monitor the legacy DCI in the second time unit to ensure the consistent understanding between the terminal and the base station, which helps reduce the monitoring complexity of the terminal and improves DCI scheduling performance.

In the second method, the terminal can monitor both the MC-DCI and the legacy DCI on the same time symbol, that is, monitor the MC-DCI and the legacy DCI at the same time.

Referring to FIG. 4, FIG. 4 is a flowchart of an information monitoring method according to an embodiment, which may be executed by a terminal. The method may include the following steps.

In step 401, it is determined that at least one same time symbol exists between a first time unit and a second time unit.

In the embodiments of the present disclosure, the first time unit is used for the terminal to monitor multi-cell downlink control information (MC-DCI), and the second time unit is used for the terminal to monitor legacy DCI. The MC-DCI refers to the DCI used to schedule data transmission of multiple cells, where the data transmission of each scheduled cell corresponds to one PDSCH and/or one PUSCH. The legacy DCI refers to the DCI agreed in the relevant protocol, including but not limited to DCI defined in version 15, version 16, and version 17.

The time unit may be a symbol, a slot, a frame or a span, which is not limited in the present disclosure.

It should be noted that one span includes multiple consecutive time symbols belonging to the same slot, and the terminal monitors the PDCCH on the span.

In the embodiments of the present disclosure, the first time unit and the second time unit completely overlap or partially overlap in the time domain.

In step 402, it is determined that the terminal monitors two of the MC-DCI and the legacy DCI at least on the same time symbol.

In the embodiments of the present disclosure, when the first time unit and the second time unit completely overlap in the time domain, the same time symbols are all symbols included in the first time unit or the second time unit.

When the first time unit and the second time unit partially overlap in the time domain, the same time symbol includes a symbol of the overlapping portion of the two time units.

In a possible implementation, the terminal directly determines, based on the protocol agreement, that the terminal monitors two of the MC-DCI and the legacy DCI at least on the same time symbol.

For example, the protocol stipulates a first condition of monitoring two types of DCI at the same time. In response to the terminal meeting the first condition on the same time symbol, it is determined that the terminal monitors two of the MC-DCI and the legacy DCI at least on the same time symbol.

The first condition includes but is not limited to at least one of the following: the number of DCI formats configured for the terminal is within the range of PDCCH monitoring capability of the terminal; the number of SS configured for the terminal is less than or equal to the first number; the number of size of DCI configured for the terminal satisfies a preset restriction condition corresponding to the size; the number of blind detection (BD) configured for the terminal is less than or equal to a second number; the number of channel control element (CCE) configured for the terminal is less than or equal to a third number.

The PDCCH monitoring capability may include but is not limited to at least one of the following: supporting monitoring at least one format of MC-DCI; supporting monitoring the MC-DCI and the legacy DCI simultaneously in the same search space (SS); supporting monitoring the MC-DCI and the legacy DCI simultaneously in different SSs.

The format corresponding to the MC-DCI includes, but is not limited to, a first format used for scheduling PUSCHs of multiple cells, and/or a second format used for scheduling PDSCHs of multiple cells. The first format can be expressed as format0_3, and the second format can be expressed as format1_3. Supporting monitoring at least one format of MC-DCI may mean that the terminal supports monitoring at least one of the first format and the second format.

The legacy DCI includes but is not limited to format0_1 and/or format1_1 in related mechanisms.

Correspondingly, supporting monitoring the MC-DCI and the legacy DCI simultaneously in the same search space (SS) may refer to supporting monitoring any combination of format0_3 and/or format1_3 of the MC-DCI and format0_1 and/or format1_1 of the legacy DCI in the same SS.

Correspondingly, supporting monitoring the MC-DCI and the legacy DCI simultaneously in different SSs may refer to supporting monitoring any combination of format0_3 and/or format1_3 of the MC-DCI and format0_1 and/or format1_1 of the legacy DCI in different SSs.

The PDCCH monitoring capability may include but is not limited to at least one of the following: under a frequency division multiplexing (FDD) system, supporting the maximum number of DCI formats monitored in each time unit on a single scheduled carrier to be greater than 2; under a time division multiplexing (TDD) system, supporting the maximum number of DCI formats monitored in each time unit on a single scheduled carrier to be greater than 3.

In the embodiments of the present disclosure, considering that the terminals supporting multi-cell data scheduling in R18 are strong-capability terminals, the terminal's capability to monitor the PDCCH can be relaxed based on relevant mechanisms. Specifically, in the FDD system, the maximum number of DCI formats that the terminal can monitor on a single scheduled CC in a single span is greater than one DL DCI and/or greater than one UL DCI. For example, the number of DCIs monitored by the terminal is one DL DCI and two UL DCIs, or two DL DCIs and one UL DCI, that is, supporting the maximum number of DCI formats monitored in each time unit on a single scheduled carrier to be greater than 2.

In the TDD system, the maximum number of DCI formats supported in each time unit on a single scheduled carrier is greater than 3. For example, the number of DCIs monitored by the terminal is two DL DCIs and two UL DCIs.

In addition to satisfying its own PDCCH monitoring capability, the terminal also needs to meet other condition(s).

For example, the number of SS configured for the terminal needs to meet a restriction of relevant mechanism. Exemplarily, the number of SS configured for the terminal is less than or equal to the first number. For example, for the downlink BWP configured in a serving cell, the number of SS sets configured for the terminal needs to be less than or equal to 10. In this case, the terminal does not need to perform a dropping operation on some SSs.

The preset restriction condition may refer to the 3+1 restriction condition in the related art, or a new restriction condition introduced for the MC-DCI, including but not limited to 4+1 restriction condition, etc.

It should be noted that the 3+1 restriction condition refers to that the number of DCI sizes scrambled by the Cell-Radio Network Temporary Identifier (C-RNTI) configured in the serving cell does not exceed 3, and the total number of DCI sizes configured in the serving cell does not exceed 4.

The 4+1 restriction condition refers to that the number of DCI sizes scrambled by C-RNTI configured in the serving cell does not exceed 4, and the total number of DCI sizes configured in the serving cell does not exceed 5.

The above is only an illustrative description, and any restriction condition on the DCI size should fall within the protection scope of the present disclosure.

The number of blind detection (BlindDecoding, BD) configured for the terminal is less than or equal to the second number, and the number of control channel element (CCE) configured for the terminal is less than or equal to the third number. The second number and the third number may be predefined numbers in the relevant mechanism.

In another possible implementation, the terminal may determine that the terminal monitors two of the MC-DCI and the legacy DCI at least on the same time symbol based on the instruction of the first signaling sent by the base station.

In another possible implementation, the terminal may determine, based on the PDCCH monitoring capability of the terminal, that the terminal monitors two of the MC-DCI and the legacy DCI at least on the same time symbol.

The specific content included in the PDCCH monitoring capability has been introduced in the above embodiments and will not be described again here.

For example, when the terminal supports monitoring the MC-DCI and the legacy DCI simultaneously in the same search space (SS), or supports monitoring the MC-DCI and the legacy DCI simultaneously in different SSs, the terminal can determine that the terminal monitors both the MC-DCI and the legacy DCI at least on the same time symbol.

For example, when the PDCCH monitoring capability includes supporting the maximum number of DCI formats monitored in each time unit on a single scheduled carrier to be greater than 2 under the frequency division multiplexing (FDD) system, and/or, supporting the maximum number of DCI formats monitored in each time unit on a single scheduled carrier to be greater than 3 under the time division multiplexing (TDD) system, the terminal may determine that the terminal monitors two of the MC-DCI and the legacy DCI at least on the same time symbol.

The maximum number of DCI formats monitored by the terminal in each time unit on a single scheduled carrier does not exceed the number of DCI formats indicated by the above-mentioned PDCCH monitoring capability.

In step 403, the MC-DCI and the legacy DCI are simultaneously monitored at least on the same time symbol.

In the embodiments of the present disclosure, the terminal may determine to monitor the MC-DCI and the legacy DCI simultaneously based on step 402, and monitor the two types of DCI simultaneously on the same time symbol.

Correspondingly, the terminal monitors the MC-DCI on the first time unit and monitors the legacy DCI on the second time unit.

In the above embodiment, when the time units for monitoring the legacy DCI and the MC-DCI overlap in the time domain, the terminal can monitor the MC-DCI in the first time unit and monitor the legacy DCI in the second time unit, so as to avoid missing any type of DCI, and ensure consistent understanding between the terminal and the base station, which helps reduce the monitoring complexity of the terminal and improves the scheduling performance of DCI.

In some optional embodiments, if the protocol stipulates the first condition for the terminal to monitor two types of DCI at the same time, when the terminal does not meet the first condition, it can be determined that the terminal monitors one of the MC-DCI and the legacy DCI at least on the same time symbol.

The first condition includes but is not limited to at least one of the following: the number of DCI formats configured for the terminal is within the range of PDCCH monitoring capability of the terminal; the number of SS configured for the terminal is less than or equal to the first number; the number of size of DCI configured for the terminal satisfies the preset restriction condition corresponding to the size; the number of blind detection (BD) configured for the terminal is less than or equal to the second number; the number of CCE configured for the terminal is less than or equal to the third number.

The PDCCH monitoring capability may include but is not limited to at least one of the following: supporting monitoring at least one format of MC-DCI; supporting monitoring the MC-DCI and the legacy DCI simultaneously in the same search space (SS); supporting monitoring the MC-DCI and the legacy DCI simultaneously in different SSs.

The format corresponding to MC-DCI includes, but is not limited to, a first format used for scheduling PUSCHs of multiple cells, and/or a second format used for scheduling PDSCHs of multiple cells. The first format can be expressed as format0_3, and the second format can be expressed as format1_3. Supporting monitoring MC-DCI of at least one format may mean that the terminal supports monitoring at least one of the first format and the second format.

The legacy DCI includes but is not limited to format0_1 and/or format1_1 in related mechanisms.

Correspondingly, supporting monitoring the MC-DCI and the legacy DCI simultaneously in the same search space (SS) may refer to supporting monitoring any combination of format0_3 and/or format1_3 of the MC-DCI and format0_1 and/or format1_1 of the legacy DCI simultaneously in the same SS.

Correspondingly, supporting monitoring the MC-DCI and the legacy DCI simultaneously in different SSs may refer to supporting monitoring any combination of format0_3 and/or format1_3 of the MC-DCI and format0_1 and/or format1_1 of the legacy DCI simultaneously in different SSs.

The PDCCH monitoring capability may include but is not limited to at least one of the following: under a frequency division multiplexing (FDD) system, supporting the maximum number of DCI formats monitored in each time unit on a single scheduled carrier to be greater than 2; under a time division multiplexing (TDD) system, supporting the maximum number of DCI formats monitored in each time unit on a single scheduled carrier to be greater than 3.

In the embodiments of the present disclosure, considering that the terminals supporting multi-cell data scheduling in R18 are strong-capability terminals, the terminal's capability to monitor the PDCCH can be relaxed based on relevant mechanisms. Specifically, in the FDD system, the maximum number of DCI format that the terminal can monitor on a single scheduled CC in a single span is greater than one DL DCI and/or greater than one UL DCI. For example, the number of DCIs monitored by the terminal is one DL DCI and two UL DCIs, or two DL DCIs and one UL DCI, that is, the maximum number of DCI formats monitored in each time unit on a single scheduled carrier is greater than 2.

In the TDD system, it is supported that the maximum number of DCI formats monitored in each time unit on a single scheduled carrier is greater than 3. For example, the number of DCIs monitored by the terminal is two DL DCIs and two UL DCIs.

In addition to satisfying its own PDCCH monitoring capability, the terminal also needs to meet other condition.

The number of SS configured for the terminal needs to meet the relevant mechanism restriction. Exemplarily, the number of SS configured for the terminal is less than or equal to the first number. For example, for the downlink BWP configured in a serving cell, the number of SS sets configured for the terminal needs to be less than or equal to 10. In this case, the terminal does not need to perform a dropping operation on some SSs.

The preset restriction condition may refer to the 3+1 restriction condition in the related art, or a new restriction condition introduced for the MC-DCI, including but not limited to 4+1 restriction condition.

It should be noted that the 3+1 restriction condition refers to that the number of DCI sizes scrambled by the Cell-Radio Network Temporary Identifier (C-RNTI) configured in the serving cell does not exceed 3, and the total number of DCI sizes configured in the serving cell does not exceed 4.

The 4+1 restriction condition refers to that the number of DCI size scrambled by C-RNTI configured in the serving cell does not exceed 4, and the total number of DCI size configured in the serving cell does not exceed 5.

The above is only an illustrative description, and any restriction condition on the DCI size should fall within the protection scope of the present disclosure.

The number of blind detection configured for the terminal is less than or equal to the second number, and the number of channel control element configured for the terminal is less than or equal to the third number. The second number and the third number may be predefined numbers in the relevant mechanism.

The manner by which the terminal determines to monitor the MC-DCI or the legacy DCI is similar to the manner in step 302 above, and will not be described again here.

Next, the information sending method provided by the present disclosure will be introduced from the base station side.

An embodiment of the present disclosure provides an information sending method. Referring to FIG. 5, FIG. 5 is a flowchart of an information sending method according to an embodiment. The method may be executed by a base station. The method may include the following steps.

In step 501, it is determined that at least one same time symbol exists between a first time unit and a second time unit.

In the embodiments of the present disclosure, the first time unit is used for the terminal to monitor multi-cell downlink control information (MC-DCI), and the second time unit is used for the terminal to monitor legacy DCI. The MC-DCI refers to the DCI used to schedule data transmission of multiple cells, where the data transmission of each scheduled cell corresponds to one PDSCH and/or one PUSCH. The legacy DCI refers to the DCI agreed in the relevant protocol, including but not limited to DCI defined in version 15, version 16, and version 17.

The time unit may be a symbol, a slot, a frame or a span, which is not limited in the present disclosure. For example, the first time unit is the first slot, and the second time unit is the second slot. For another example, the first time unit is the first span, and the second time unit is the second span.

It should be noted that one span includes multiple consecutive time symbols belonging to the same slot, and the terminal monitors the Physical Downlink Control Channel (PDCCH) on the span.

In the embodiments of the present disclosure, the existence of at least one same time symbol between the first time unit and the second time unit may mean that the first time unit and the second time unit completely overlap in the time domain. At this time, the time symbols included in the two time units are the same.

Alternatively, the existence of at least one same time symbol between the first time unit and the second time unit may mean that the first time unit and the second time unit partially overlap in the time domain, that is, some of the time symbols included in the two time units are the same.

The above time symbol may be a symbol.

In step 502, it is determined to send at least one of the MC-DCI and the legacy DCI to the terminal at least on the same time symbol.

In the embodiments of the present disclosure, when the first time unit and the second time unit completely overlap in the time domain, the same time symbols are all symbols included in the first time unit or the second time unit, for example, as shown in FIG. 2B.

When the first time unit and the second time unit partially overlap in the time domain, the same time symbol includes a symbol of the overlapping portion of the two time units, for example, as shown in FIG. 2C.

In the embodiments of the present disclosure, the base station may determine to send at least one of the MC-DCI and the legacy DCI to the terminal on at least the same time symbol.

In another embodiment, the base station can also assist the base station in determining the DCI transmission behavior based on the terminal behavior, that is, the terminal's monitoring behavior at least on the same time symbol, including but not limited to determining that the base station may send the MC-DCI to the terminal on the first time unit, and/or may send the legacy DCI to the terminal on the second time unit. After the base station determines the DCI transmission behavior, it may send the corresponding DCI to the terminal according to the determined DCI transmission behavior, thereby avoiding waste of DCI transmission resources.

For example, the base station determines that the terminal monitors the MC-DCI at least on the same time symbol, then the base station determines that it may send the MC-DCI to the terminal in the first time unit. At this time, the base station no longer sends the legacy DCI to the terminal in the second time unit, which can avoid wasting the DCI transmission resources.

In a possible implementation, the base station determines that it can send the MC-DCI to the terminal in the first time unit, or the base station determines that it can send the legacy DCI to the terminal in the second time unit.

In another possible implementation, the base station determines that it may send the MC-DCI on the first time unit and may send the legacy DCI on the second time unit.

It should be noted that in the present disclosure, the base station determines to send at least one of the MC-DCI and the legacy DCI to the terminal, which specifically means that the base station can send at least one of the MC-DCI and the legacy DCI to the terminal. That is, after the base station determines to send at least one of the MC-DCI and the legacy DCI to the terminal, it may not send at least one of the MC-DCI and the legacy DCI. Whether the base station sends the MC-DCI and/or the legacy DCI is related to whether there is a scheduling requirement currently.

In the above embodiment, it is possible to ensure that the terminal and the base station have consistent understanding, which is beneficial to reducing the monitoring complexity of the terminal and improving the scheduling performance of DCI.

In the first method: it is determined that the base station can send one of the MC-DCI and the legacy DCI to the terminal at least on the same time symbol.

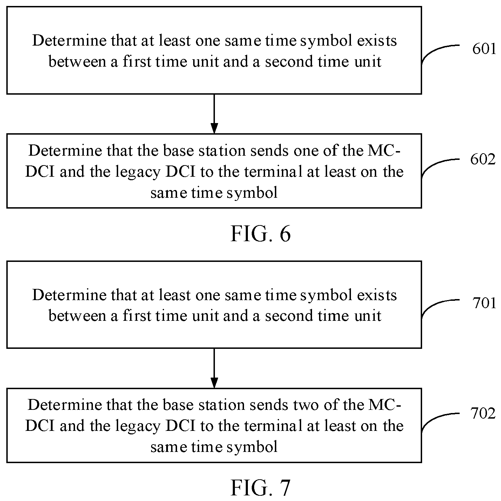

Referring to FIG. 6, FIG. 6 is a flowchart of an information sending method according to an embodiment. The method may be executed by a base station. The method may include the following steps.

In step 601, it is determined that at least one same time symbol exists between a first time unit and a second time unit.

In the embodiments of the present disclosure, the first time unit is used for the terminal to monitor multi-cell downlink control information (MC-DCI), and the second time unit is used for the terminal to monitor legacy DCI. The MC-DCI refers to the DCI used to schedule data transmission of multiple cells, where the data transmission of each scheduled cell corresponds to one PDSCH and/or one PUSCH. The legacy DCI refers to the DCI agreed in the relevant protocol, including but not limited to DCI defined in version 15, version 16, and version 17.

The time unit may be a symbol, a slot, a frame or a span, which is not limited in the present disclosure. For example, the first time unit is the first slot, and the second time unit is the second slot. For another example, the first time unit is the first span, and the second time unit is the second span.

It should be noted that one span includes multiple consecutive time symbols belonging to the same slot, and the terminal monitors the PDCCH on the span.

In the embodiments of the present disclosure, the existence of at least one same time symbol between the first time unit and the second time unit may mean that the first time unit and the second time unit completely overlap in the time domain. At this time, the time symbols included in the two time units are the same.

Alternatively, the existence of at least one same time symbol between the first time unit and the second time unit may mean that the first time unit and the second time unit partially overlap in the time domain, that is, some of the time symbols among the time symbols included in the two time units are the same.

The above time symbol may be a symbol.

In step 602, it is determined that the base station sends one of the MC-DCI and the legacy DCI to the terminal at least on the same time symbol.

In the embodiments of the present disclosure, when the first time unit and the second time unit completely overlap in the time domain, the same time symbols are all symbols included in the first time unit or the second time unit.

When the first time unit and the second time unit partially overlap in the time domain, the same time symbol includes a symbol of the overlapping portion of the two time units.

In a possible implementation, the base station can directly determine based on the protocol agreement that the base station can send one of the MC-DCI and the legacy DCI to the terminal at least on the same time symbol.

For example, in order to reduce the impact of multi-cell data scheduling on the legacy DCI as much as possible, and considering that the overhead of monitoring the MC-DCI on the terminal side is large and the MC-DCI transmission performance is low, it may be agreed through the protocol that when there is at least one same time symbol between the first time unit and the second time unit, the base station determines that it can only send the legacy DCI to the terminal at least on the same time symbol and can drop sending the MC-DCI.

Specifically, the base station determines that it can send the MC-DCI to the terminal on the first time symbol, and can drop sending the legacy DCI to the terminal on the second time symbol.

For example, if giving up sending the MC-DCI will affect the data transmission of multiple scheduled cells, it may be agreed through the protocol that the base station determines that the MC-DCI can be sent to the terminal at least on the same time symbol and sending the legacy DCI can be dropped.

Specifically, the base station determines that the legacy DCI can be sent on the second time symbol and sending the MC-DCI to the terminal on the first time symbol can be given up.

In another possible implementation, the base station may send a first signaling to the terminal, instructing the terminal through the first signaling to monitor one of the MC-DCI and the legacy DCI at least on the same time symbol.

The base station may consider the scheduling needs of different terminals and flexibly schedule the terminal to monitor one of the MC-DCI and the legacy DCI at least on the same time symbol through the first signaling, which provides high flexibility and availability.

Correspondingly, based on the first signaling sent to the terminal, the base station determines that one of the MC-DCI and the legacy DCI can be sent to the terminal at least on the same time symbol.

Specifically, the base station determines that it can send the MC-DCI to the terminal on the first time symbol, and can drop sending the legacy DCI to the terminal on the second time symbol. Alternatively, the base station determines that the legacy DCI can be sent on the second time symbol and sending the MC-DCI to the terminal on the first time symbol can be dropped.

In another possible implementation, the base station may determine, based on the PDCCH detection capability reported by the terminal, that the base station can send one of the MC-DCI and the legacy DCI to the terminal at least on the same time symbol.

The description of the PDCCH detection capability has been introduced on the terminal side and will not be repeated here. In addition, a manner, determined by the base station side, for the base station to send one of the MC-DCI and the legacy DCI to the terminal at least on the same time symbol based on the PDCCH detection capability reported by the terminal is similar to the manner for the terminal side to determine to monitor one of the MC-DCI and the legacy DCI, and will not be described again here.

Specifically, the base station determines that it can send the MC-DCI to the terminal on the first time symbol, and can give up sending the legacy DCI to the terminal on the second time symbol. Alternatively, the base station determines that the legacy DCI can be sent on the second time symbol and sending the MC-DCI to the terminal on the first time symbol can be given up.

In the present disclosure, the base station determines to send at least one of the MC-DCI and the legacy DCI to the terminal, which specifically means that the base station can send at least one of the MC-DCI and the legacy DCI to the terminal. That is, after the base station determines to send at least one of the MC-DCI and the legacy DCI to the terminal, it may not send at least one of the MC-DCI and the legacy DCI. Whether the base station sends the MC-DCI and/or the legacy DCI is related to whether there is a scheduling requirement currently.

In the above embodiment, when the base station determines that the terminal monitors the MC-DCI or the legacy DCI at least on the same time symbol, it may determine that it can send the MC-DCI to the terminal on the first time unit, or determine that it can send the legacy DCI to the terminal on the second time unit, thereby ensuring consistent understanding between the terminal and the base station, which helps reduce the complexity of terminal monitoring and improves DCI scheduling performance.

In the second method: it is determined that the base station may send two of the MC-DCI and the legacy DCI to the terminal at least on the same time symbol.

Referring to FIG. 7, FIG. 7 is a flowchart of an information sending method according to an embodiment. The method may be executed by a base station. The method may include the following steps.

In step 701, it is determined that at least one same time symbol exists between a first time unit and a second time unit.

In the embodiments of the present disclosure, the first time unit is used for the terminal to monitor multi-cell downlink control information (MC-DCI), and the second time unit is used for the terminal to monitor legacy DCI. The MC-DCI refers to the DCI used to schedule data transmission of multiple cells, where the data transmission of each scheduled cell corresponds to one PDSCH and/or one PUSCH. The legacy DCI refers to the DCI agreed in the relevant protocol, including but not limited to DCI defined in version 15, version 16, and version 17.

The time unit may be a symbol, a slot, a frame or a span, which is not limited in the present disclosure. For example, the first time unit is the first slot, and the second time unit is the second slot. For another example, the first time unit is the first span, and the second time unit is the second span.

It should be noted that one span includes multiple consecutive time symbols belonging to the same slot, and the terminal monitors the PDCCH on the span.

In the embodiments of the present disclosure, the existence of at least one same time symbol between the first time unit and the second time unit may mean that the first time unit and the second time unit completely overlap in the time domain. At this time, the time symbols included in the two time units are the same.

Alternatively, the existence of at least one same time symbol between the first time unit and the second time unit may mean that the first time unit and the second time unit partially overlap in the time domain, that is, some of the time symbols among the time symbols included in the two time units are the same.

The above time symbol may be a symbol.

In step 702, it is determined that the base station sends two of the MC-DCI and the legacy DCI to the terminal at least on the same time symbol.

In the embodiments of the present disclosure, when the first time unit and the second time unit completely overlap in the time domain, the same time symbols are all symbols included in the first time unit or the second time unit.

When the first time unit and the second time unit partially overlap in the time domain, the same time symbol includes a symbol of the overlapping portion of the two time units.

The base station side determines that at least on the same time symbol, one of the MC-DCI and the legacy DCI can be sent to the terminal in a manner similar to the implementation on the terminal side, which may refer to the implementation provided in the above step 402, and will not be described again here.

In the embodiments of the present disclosure, the base station determines that the MC-DCI can be sent to the terminal on the first time unit, and the legacy DCI can be sent to the terminal on the second time unit. In the present disclosure, the base station determines to send at least one of the MC-DCI and the legacy DCI to the terminal, which specifically means that the base station can send at least one of the MC-DCI and the legacy DCI to the terminal. That is, after the base station determines to send at least one of the MC-DCI and the legacy DCI to the terminal, it may not send at least one of the MC-DCI and the legacy DCI. Whether the base station sends the MC-DCI and/or the legacy DCI is related to whether there is a scheduling requirement currently. In the above embodiment, the base station determines that it can send the MC-DCI to the terminal in the first time unit, and can send the legacy DCI to the terminal in the second time unit, ensuring consistent understanding between the terminal and the base station, which is conducive to reducing the complexity of terminal monitoring, and improving the scheduling performance of DCI.

In some optional embodiments, if the protocol stipulates the first condition for the terminal to monitor two types of DCI at the same time, when the terminal does not meet the first condition, the base station determines that it can send one of the MC-DCI and the legacy DCI to the terminal at least on the same time symbol.

The specific content of the first condition has been introduced on the terminal side and will not be repeated here.

Accordingly, the base station determines that the MC-DCI can be sent on the first time unit, or the legacy DCI can be sent on the second time unit.

The above method is further illustrated below with examples.

In the first embodiment, it is assumed that the terminal is a version 18 or later version terminal, and the terminal receives PDSCHs of multiple cells or transmits PUSCHs of multiple cells based on MC-DCI. The format corresponding to the MC-DCI is different from the legacy DCI format. In the present disclosure, DCI format 0_3 scheduling PUSCHs of multiple cells and DCI format 1_3 scheduling PDSCHs of multiple cells is taken as an example to illustrate the solution of the present disclosure.

In a possible implementation, the PDCCH monitoring capability of the terminal is defined. The PDCCH monitoring capability includes but is not limited to at least one of the following: supporting monitoring DCI format 0_3 and/or supporting monitoring DCI format 1_3; supporting monitoring DCI format 0_1/1_1 and DCI format 0_3/1_3 simultaneously in the same or different search spaces; supporting monitoring the legacy DCI and the MC-DCI (DCI format 0_3/1_3) simultaneously in the same or different search spaces.

Based on the PDCCH monitoring capability reported by the terminal side, the base station determines that the terminal supports one or more of the above capabilities. The legacy DCI is the DCI defined by the existing mechanism (Rel 15, Rel 16 or Rel 17).

One possible implementation considers that the terminals supporting multiple cell data scheduling in Rel 18 are strong-capability users. On the basis of relevant mechanisms, the terminal's capability to monitor PDCCH is relaxed. The PDCCH monitoring capability includes but is not limited to at least one of the following: in the FDD system, the maximum number of DCI format that can be monitored by the terminal on a single scheduled CC in a single span is greater than one DL DCI and/or greater than one UL DCI, for example, the maximum number of DCI format that can be monitored is one DL DCL and two UL DCL, or the maximum number of DCI format that can be monitored is two DL DLC and one UL DCL; in the TDD system, the maximum number of DCI formats that can be monitored by the terminal on a single scheduled CC in a single span is greater than 3, for example, two DL DCI and two UL DCI.

The terminal indicates whether it supports one or more of the above capabilities based on the capability report.

In a possible implementation, the terminal does not support monitoring the legacy DCI (or DCI format 0_1 or 1_1) and DCI format 0_3 or DCI format1_3 in the same (or different) search space simultaneously; or the terminal supports monitoring the legacy DCI (or DCI format 0_1 or 1_1) and DCI format 0_3 (DCI format 1_3) in the same (or different) search space simultaneously; but the number of configured DCI formats, or the number of SS exceeds the terminal capability; it is determined that the terminal does not support simultaneous monitoring the legacy DCI and the MC-DCI (DCI format 0_3 or 1_3) according to the manner of protocol predefinition or signaling indication. Based on one or more of the above scenarios, the terminal only supports monitoring one of the MC-DCI and the legacy DCI within the range of a same span.

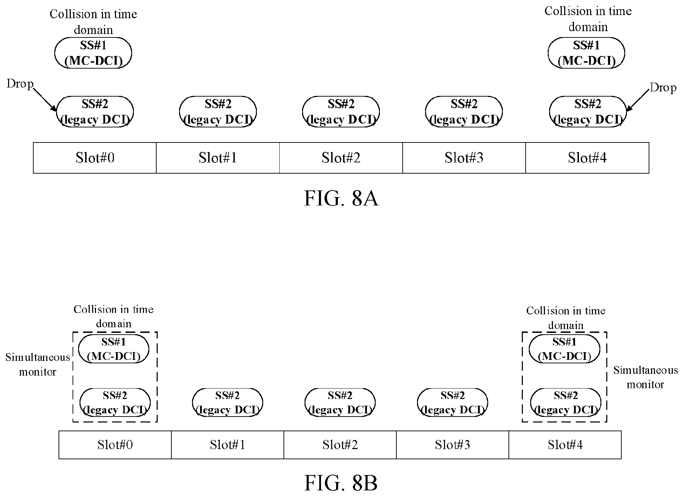

In a possible implementation, in order to minimize the impact of MC-DCI scheduling on the legacy DCI, when the MC-DCI and the legacy DCI collide in the time domain, the terminal only monitors the legacy DCI and drops monitoring the MC-DCI. The exemplary description is shown in FIG. 8A.

In FIG. 8A, the first time unit and the second time unit completely overlap as an example. In this case, the same time symbols include all symbols included in the first time unit or the second time unit. Based on the method provided by the present disclosure, the terminal can determine to monitor the legacy DCI on the span where the first time unit and the second time unit completely overlap, and drop monitoring the MC-DCI. In other words, the terminal only monitors the MC-DCI on slot #0 and slot #4, and monitors the legacy DCI on other slots, such as slot #1, slot #2, and slot #3 according to the relevant mechanism.

In a possible implementation, it is considered that the MC-DCI is used to schedule data transmission of multiple cells. If monitoring MC-DCI is dropped, it will have an impact on the data transmission of multiple scheduled cells. When there is a collision between the MC-DCI and the legacy DCI in the time domain, the terminal only monitors the MC-DCI and drops monitoring the legacy DCI.

In a possible implementation, the terminal determines to monitor one of the MC-DCI or the legacy DCI based on DCI related information, such as different SS configuration cycles, the number of SS continuous slots, the number of CORESET continuous symbols, or the CORESET frequency domain continuous range, etc. When the MC-DCI and the legacy DCI collide in the time domain, the terminal determines to monitor the MC-DCI or the legacy DCI based on one or more of the following manners:
considering that when the SS configuration cycle is larger, the corresponding DCI transmission density is smaller, the terminal only monitors the DCI corresponding to the larger SS configuration cycle;
considering that when the number of SS continuous slots is small, the corresponding DCI transmission density is small, the terminal only monitors the DCI with a corresponding smaller number of SS continuous slots;
considering that if the number of CORESET continuous symbols or the frequency domain resource range is larger, the resources occupied by the corresponding DCI transmission may be more, the terminal only monitors the DCI with a corresponding larger number of continuous symbols of CORESET or frequency domain resource range occupied by CORESET.

Correspondingly, when the terminal side determines to monitor the MC-DCI at least on the same time symbol, the terminal side may monitor the MC-DCI on the first time unit.

If the terminal side determines to monitor the legacy DCI at least on the same time symbol, it may monitor the legacy DCI on the second time unit.

In addition, for the base station side, it can be determined that one of the MC-DCI or the legacy DCI can be sent to the terminal at least on the same time symbol as mentioned above.

In a possible implementation, the base station determines that the MC-DCI can be sent to the terminal on the first time unit.

In another possible implementation, the base station determines that the legacy DCI can be sent to the terminal on the second time unit.

In the embodiments of the present disclosure, the base station determines to send at least one of the MC-DCI and the legacy DCI to the terminal. Specifically, it means that the base station can send at least one of the MC-DCI and the legacy DCI to the terminal. That is, after the base station determines to send at least one of the MC-DCI and the legacy DCI to the terminal, it may not send at least one of the MC-DCI and the legacy DCI. Whether the base station sends the MC-DCI and/or the legacy DCI is related to whether there is a scheduling requirement currently.

The embodiment of the present disclosure considers that the MC-DCI and the legacy DCI collide in the time domain and only one type of the DC can be monitored, in this case, a scheme is designed to determine the DCI monitored by the terminal, thereby achieving consistent understanding between the terminal and the base station, which is conducive to reducing the monitoring complexity of the terminal.

In the second embodiment, it is assumed that the terminal is a terminal of version 18 or later version, and the terminal receives PDSCHs of multiple cells or transmits PUSCHs of multiple cells based on MC-DCI. The format corresponding to MC-DCI is different from the legacy DCI format. The present disclosure takes DCI format 0_3 to schedule PUSCHs of multiple cells and DCI format 1_3 to schedule PDSCHs of multiple cells as an example to illustrate the solution of the present disclosure.

A possible implementation manner defines the PDCCH monitoring capability of the terminal. The PDCCH monitoring capability includes but is not limited to at least one of the following: supporting monitoring DCI format 0_3 and/or supporting monitoring DCI format 1_3; supporting simultaneous monitoring DCI format 0_1/1_1 and DCI format 0_3/1_3 in the same or different search spaces; supporting simultaneous monitoring legacy DCI and MC-DCI (DCI format 0_3/1_3) in the same or different search spaces.

Based on the PDCCH monitoring capability reported by the terminal side, the base station determines that the terminal supports one or more of the above capabilities.

The legacy DCI is the DCI defined by the existing mechanism (Rel 15, Rel 16 or Rel 17).

One possible implementation considers that terminals supporting multiple cell data scheduling in Rel18 are strong-capability users. On the basis of relevant mechanisms, the terminal's capability to monitor PDCCH is relaxed. The PDCCH monitoring capability includes but is not limited to at least one of the following: in the FDD system, the maximum number of DCI format that can be monitored by the terminal on a single scheduled CC in a single span is greater than one DL DCI and/or greater than one UL DCI, for example, the maximum number of DCI format that can be monitored is one DL DCL and two UL DCL, or the maximum number of DCI format that can be monitored is two DL DLC and one UL DCL; in the TDD system, the maximum number of DCI formats that can be monitored by the terminal on a single scheduled CC in a single span is greater than 3, for example, two DL DCI and two UL DCI.

Based on the PDCCH monitoring capability reported by the terminal side, the base station determines that the terminal supports one or more of the above capabilities.

In a possible implementation, the terminal capability supports monitoring legacy DCI (or DCI format 0_1 or 1_1) and MC-DCI (DCI format 0_3 or 1_3) simultaneously in the same (or different) search space. Based on the instruction of the first signaling, the terminal determines to monitor one or more of the legacy DCI and MC-DCI at the same time. For example, the terminal receives the first signaling, and the first signaling instructs the terminal to monitor the legacy DCI and MC-DCI at the same time, or only monitor the legacy DCI, or only monitor one of MC-DCI. If the above first signaling is not configured, the terminal determines the monitored DCI based on the method described in the first embodiment.

A possible implementation is that under the condition that MC-DCI and legacy DCI collide in the time domain, the terminal capability supports monitoring legacy DCI (or DCI format 0_1/1_1) and MC-DCI (DCI format 0_3/1_3) in the same (or different) search space at the same time, and the first condition is met. The first condition includes at least one of the following:
the number of DCI format configured for the terminal is within the capability range of monitoring PDCCH of the terminal defined by legacy or Rel 18;
the number of SS configured for the terminal meets the limitation of the existing mechanism, for example, for the downlink BWP configured in a serving cell, the number of SS sets configured for the terminal is S≤10, and the terminal does not need to drop some SSs;
the number of DCI sizes configured for the terminal meets the 3+1 restriction, the number of DCI sizes may be the number of DCI sizes before the DCI alignment operation or the number of DCI sizes after the DCI alignment operation;
the numbers of BD and CCE configured for the terminal in the slot and span meet the limitation of the existing mechanism;
the terminal can monitor MC-DCI and legacy DCI at the same time. An exemplary description is shown in FIG. 8B. In FIG. 8B, the first time unit and the second time unit completely overlap as an example. In this case, the same time symbol includes all symbols included in the first time unit or the second time unit. Based on the method provided by the present disclosure, the terminal can simultaneously monitor legacy DCI and MC-DCI on the span where the first time unit and the second time unit completely overlap. In other words, the terminal monitors MC-DCI and legacy DCI on slot #0 and slot #4 at the same time, and monitors legacy DCI on other slots, such as slot #1, slot #2, and slot #3 according to relevant mechanisms.

In addition, for the base station side, it is determined that two of the legacy DCI and MC-DCI can be sent to the terminal at least on the same time symbol as mentioned above.

In a possible implementation, the base station determines that MC-DCI can be sent to the terminal on the first time unit, and legacy DCI can be sent to the terminal on the second time unit.

In the embodiments of the present disclosure, the base station determines to send at least one of the MC-DCI and the legacy DCI to the terminal. Specifically, it means that the base station can send at least one of the MC-DCI and the legacy DCI to the terminal. That is, after the base station determines to send at least one of the MC-DCI and the legacy DCI to the terminal, it may not send at least one of the MC-DCI and the legacy DCI. Whether the base station sends MC-DCI and/or legacy DCI is related to whether there is a scheduling requirement currently. If one or more items of the above first condition are not met, the terminal only monitors one of MC-DCI or legacy DCI, and the specific monitoring DCI is determined based on the method described in the first embodiment.

The embodiment of the present disclosure considers that the terminal has the capability to monitor MC-DCI and legacy DCI at the same time, and the design rule determines the first condition for the terminal to monitor MC-DCI and legacy DCI at the same time. Therefore, consistent understanding between the terminal and the base station is achieved, which is beneficial to reducing the monitoring complexity of the terminal and improving DCI scheduling performance.

Corresponding to the foregoing application function implementation method embodiments, the present disclosure also provides the application function implementation apparatus embodiments.

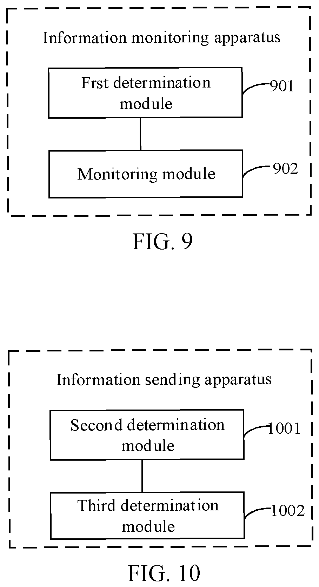

Referring to FIG. 9, FIG. 9 is a block diagram of an information monitoring apparatus according to an exemplary embodiment. The apparatus is applied to a terminal and includes:
a first determination module 901, configured to determine that at least one same time symbol exists between a first time unit and a second time unit; where the first time unit is used for the terminal to monitor multi-cell downlink control information (MC-DCI), the second time unit is used for the terminal to monitor legacy DCI; and
a monitoring module 902, configured to monitor at least one of the MC-DCI and the legacy DCI at least on the same time symbol.

Referring to FIG. 10, FIG. 10 is a block diagram of an information sending apparatus according to an exemplary embodiment. The apparatus is applied to a base station and includes:
a second determination module 1001, configured to determine that at least one same time symbol exists between a first time unit and a second time unit; where the first time unit is used for the terminal to monitor multi-cell downlink control information (MC-DCI), and the second time unit is used for the terminal to monitor legacy DCI; and
a third determination module 1002, configured to determine to send at least one of the MC-DCI and the legacy DCI to the terminal at least on the same time symbol.

As for the apparatus embodiments, since they basically correspond to the method embodiment, the partial description of the method embodiments may be referred to for relevant details. The apparatus embodiments described above are only illustrative. The units described above as separate components may or may not be physically separated. The components shown as units may or may not be physical units, that is, they may be located in one place, or may be distributed across multiple network units. Some or all of the modules may be selected according to actual conditions to achieve the purpose of the disclosed solution. Persons of ordinary skill in the art can understand and implement them without any creative effort.

Correspondingly, the present disclosure also provides a computer-readable storage medium that stores a computer program, and the computer program is used to execute any one of the above information monitoring methods.

Correspondingly, the present disclosure also provides a computer-readable storage medium that stores a computer program, and the computer program is used to execute any one of the above information sending methods.

Correspondingly, the present disclosure also provides an information monitoring apparatus, including:
a processor; and
a memory used to store instructions executable by the processor;
where the processor is configured to execute any one of the above information monitoring methods on the terminal side.

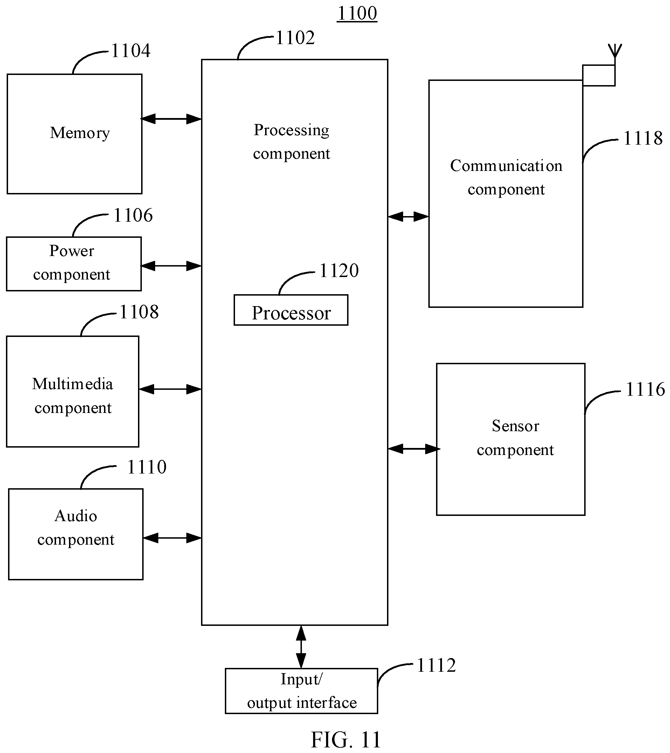

FIG. 11 is a block diagram of an information monitoring apparatus 1100 according to an exemplary embodiment. For example, the apparatus 1100 may be a mobile phone, a tablet, an e-book reader, a multimedia playback device, a wearable device, a vehicle-mounted user equipment, an iPad, a smart TV and other terminals.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1116, and a communication component 1118.

The processing component 1102 typically controls overall operations of the apparatus 1100, such as the operations associated with display, telephone calls, data random access, camera operations, and recording operations. The processing component 1102 may include one or more processors 1120 to execute instructions to complete all or part of the steps of the above-described information monitoring method. Moreover, the processing component 1102 may include one or more modules which facilitate the interaction between the processing component 1102 and other components. For example, the processing component 1102 may include a multimedia module to facilitate the interaction between the multimedia component 1108 and the processing component 1102. As another example, the processing component 1102 may read executable instructions from the memory to implement the steps of the information monitoring method provided by the above embodiments.

The memory 1104 is configured to store various types of data to support the operations of the apparatus 1100. Examples of such data include instructions for any applications or methods operating on the apparatus 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 may include a power management system, one or more power sources, and other components associated with the generation, management, and distribution of power in the apparatus 1100.

The multimedia component 1108 includes a display screen that provides an output interface between the apparatus 1100 and the user. In some embodiments, the multimedia component 1108 includes a front camera and/or a rear camera. The front camera and/or the rear camera may receive an external multimedia datum while the apparatus 1100 is in an operation mode, such as a shooting mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the apparatus 1100 is in an operation mode, such as a call mode, a recording mode, and a voice recognition mode. The received audio signal may be further stored in the memory 1104 or sent via the communication component 1118. In some embodiments, the audio component 1110 also includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1116 includes one or more sensors to provide status assessment of various aspects of the apparatus 1100. For instance, the sensor component 1116 may detect an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or acceleration/deceleration of the apparatus 1100, and a change in temperature of the apparatus 1100. The sensor assembly 1116 may include a proximity sensor configured to detect the presence of nearby objects without any physical contact. The sensor assembly 1116 may also include a light sensor, such as a CMOS or CCD image sensor, for use in imaging applications. In some embodiments, the sensor component 1116 may also include an acceleration sensor, a gyroscope sensor, a magnetic sensor, a pressure sensor, or a temperature sensor.

The communication component 1118 is configured to facilitate communication, wired or wirelessly, between the apparatus 1100 and other devices. The apparatus 1100 can access a wireless network based on a communication standard, such as Wi-Fi, 2G, 3G, 4G, 5G or 6G, or a combination thereof. In one exemplary embodiment, the communication component 1118 receives a broadcast signal or broadcast related information from an external broadcast management system via a broadcast channel. In one exemplary embodiment, the communication component 1118 further includes a near field communications (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1100 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for executing any of the above information monitoring methods on the terminal side.

In exemplary embodiments, there is further provided a non-transitory machine-readable storage medium including instructions, such as a memory 1104 including instructions, which can be executed by the processor 1120 of the apparatus 1100 to complete the above information monitoring methods. For example, the non-transitory computer-readable storage medium may be a ROM, a random access memory (RAM), a CD-ROM, a magnetic tape, a floppy disk, an optical data storage device, and the like.

Correspondingly, the present disclosure also provides an information sending apparatus, including:
a processor; and
a memory used to store instructions executable by the processor;
where the processor is configured to execute any one of the above information sending methods on the base station side.

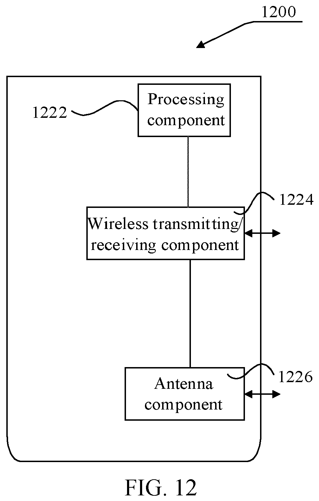

As shown in FIG. 12, FIG. 12 is a schematic structural diagram of an information sending apparatus 1200 according to an exemplary embodiment. The apparatus 1200 may be provided as a base station. Referring to FIG. 12, the apparatus 1200 includes a processing component 1222, a wireless transmitting/receiving component 1224, an antenna component 1226, and a wireless interface-specific signal processing portion. The processing component 1222 may further include at least one processor.

One of the processors in the processing component 1222 may be configured to perform any one of the above information sending methods.

Other embodiments of the present disclosure will be readily apparent to those skilled in the art from consideration of the specification and practice of the contents disclosed herein. The present disclosure is intended to cover any variations, uses, or adaptations of the present disclosure that follow the general principles of the present disclosure and include common knowledge or customary technical means in the technical field that are not disclosed in the present disclosure. It is intended that the specification and embodiments be considered as exemplary only, with a true scope and spirit of the present disclosure being indicated by the appending claims.

It is to be understood that the present disclosure is not limited to the precise structures described above and illustrated in the accompanying drawings, and various modifications and changes may be made without departing from the scope thereof. The scope of the present disclosure is limited only by the appended claims.

## Claims

1. An information monitoring method, wherein the method is executed by a terminal and comprises:
determining that at least one same time symbol exists between a first time unit and a second time unit; wherein the first time unit is used for the terminal to monitor multi-cell downlink control information (MC-DCI), and the second time unit is used for the terminal to monitor legacy DCI; and
monitoring at least one of the MC-DCI and the legacy DCI at least on the same time symbol.

2. The method according to claim 1, further comprising at least one of:
based on a protocol agreement, determining that the terminal monitors one or two of the MC-DCI and the legacy DCI at least on the same time symbol;
receiving a first signaling sent by a base station, and determining that the terminal monitors one or two of the MC-DCI and the legacy DCI at least on the same time symbol;
based on a physical downlink control channel (PDCCH) monitoring capability of the terminal, determining that the terminal monitors one or two of the MC-DCI and the legacy DCI at least on the same time symbol.

3. The method according to claim 2, wherein the PDCCH monitoring capability comprises at least one of:
supporting monitoring at least one format of the MC-DCI;
supporting monitoring the MC-DCI and the legacy DCI simultaneously in a same search space (SS);
supporting monitoring the MC-DCI and the legacy DCI simultaneously in different SSs.

4. The method according to claim 2, wherein the PDCCH monitoring capability comprises at least one of:
under a frequency division multiplexing (FDD) system, supporting a maximum number of DCI formats monitored in each time unit on a single scheduled carrier to be greater than 2;
under a time division multiplexing (TDD) system, supporting a maximum number of DCI formats monitored in each time unit on a single scheduled carrier to be greater than 3.

5. The method according to claim 2, wherein determining that the terminal monitors one of the MC-DCI and the legacy DCI at least on the same time symbol comprises:
based on DCI association information, determining DCI that the terminal monitors at least on the same time symbol.

6. The method according to claim 5, wherein the DCI association information is any one of:
an SS configuration cycle when monitoring the DCI;
a number of continuous slots for monitoring the DCI within each of the SS configuration cycle.

7. The method according to claim 6, wherein determining the DCI that the terminal monitors at least on the same time symbol based on the DCI association information comprises any of:
in a case that an SS configuration cycle corresponding to the MC-DCI is greater than an SS configuration cycle corresponding to the legacy DCI, determining that the terminal monitors the MC-DCI on the first time unit;
in a case that the SS configuration cycle corresponding to the MC-DCI is less than or equal to the SS configuration cycle corresponding to the legacy DCI, determining that the terminal monitors the legacy DCI on the second time unit;
in a case that a number of continuous slots for monitoring the DCI within the SS configuration cycle corresponding to the MC-DCI is less than a number of continuous slots for monitoring the DCI within the SS configuration cycle corresponding to the legacy DCI, determining that the terminal monitors the MC-DCI on the first time unit;
in a case that the number of continuous slots for monitoring the DCI within the SS configuration cycle corresponding to the MC-DCI is greater than or equal to the number of continuous slots for monitoring the DCI within the SS configuration cycle corresponding to the legacy DCI, determining that the terminal monitors the legacy DCI on the second time unit.

8. The method according to claim 2, wherein determining that the terminal monitors two of the MC-DCI and the legacy DCI at least on the same time symbol based on the protocol agreement, comprises:
in response to the terminal satisfying a first condition on the same time symbol, determining that the terminal monitors the MC-DCI on the first time unit and monitors the legacy DCI on the second time unit.

9. The method according to claim 2, further comprising:
in response to the terminal not satisfying a first condition on the same time symbol, determining that the terminal monitors one of the MC-DCI and the legacy DCI at least on the same time symbol.

10. The method according to claim 8 or 9, wherein the first condition comprises at least one of:
a number of DCI format configured for the terminal is within a range of the PDCCH monitoring capability of the terminal;
a number of SS configured for the terminal is less than or equal to a first number;
a number of size of DCI configured for the terminal satisfies a preset restriction condition corresponding to the size;
a number of blind detection (BD) configured for the terminal is less than or equal to a second number;
a number of channel control element (CCE) configured for the terminal is less than or equal to a third number.

11. An information sending method, wherein the method is executed by a base station and comprises:
determining that at least one same time symbol exists between a first time unit and a second time unit; wherein the first time unit is used for a terminal to monitor multi-cell downlink control information (MC-DCI), and the second time unit is used for the terminal to monitor legacy DCI; and
determining to send at least one of the MC-DCI and the legacy DCI to the terminal at least on the same time symbol.

12. The method according to claim 11, further comprising:
sending a first signaling to the terminal; wherein the first signaling is used for instructing the terminal to monitor one or two of the MC-DCI and the legacy DCI at least on the same time symbol;
determining to send at least one of the MC-DCI and the legacy DCI to the terminal at least on the same time symbol comprises:
based on the first signaling, determining that the base station sends one or two of the MC-DCI and the legacy DCI to the terminal at least on the same time symbol.

13. The method according to claim 11, wherein determining to send at least one of the MC-DCI and the legacy DCI to the terminal at least on the same time symbol comprises any of:
based on a protocol agreement, determining that the base station sends one or two of the MC-DCI and the legacy DCI to the terminal at least on the same time symbol;
based on a PDCCH detection capability reported by the terminal, determining that the base station sends one or two of the MC-DCI and the legacy DCI to the terminal at least on the same time symbol.

14. The method according to claim 13, wherein the PDCCH monitoring capability comprises at least one of:
supporting monitoring at least one format of MC-DCI;
supporting monitoring the MC-DCI and the legacy DCI simultaneously in a same search space (SS);
supporting monitoring the MC-DCI and the legacy DCI simultaneously in different SSs.

15. The method according to claim 13, wherein the PDCCH monitoring capability comprises at least one of:
under a frequency division multiplexing (FDD) system, supporting a maximum number of DCI formats monitored in each time unit on a single scheduled carrier to be greater than 2;
under a time division multiplexing (TDD) system, supporting a maximum number of DCI formats monitored in each time unit on a single scheduled carrier to be greater than 3.

16. The method according to claim 12 or 13, wherein determining that the base station sends one of the MC-DCI and the legacy DCI to the terminal at least on the same time symbol, comprises:
based on DCI association information, determining DCI sent by the base station to the terminal at least on the same time symbol.

17. The method according to claim 16, wherein the DCI association information is any one of:
an SS configuration cycle when monitoring the DCI;
a number of continuous slots for monitoring the DCI within each of the SS configuration cycle.

18. The method according to claim 17, wherein determining the DCI sent by the base station to the terminal at least on the same time symbol based on the DCI association information comprises any of:
in a case that an SS configuration cycle corresponding to the MC-DCI is greater than an SS configuration cycle corresponding to the legacy DCI, determining that the base station sends the MC-DCI to the terminal on the first time unit;
in a case that the SS configuration cycle corresponding to the MC-DCI is less than or equal to the SS configuration cycle corresponding to the legacy DCI, determining that the base station sends the legacy DCI to the terminal on the second time unit;
in a case that a number of continuous slots for monitoring the DCI within the SS configuration cycle corresponding to the MC-DCI is less than a number of continuous slots for monitoring the DCI within the SS configuration cycle corresponding to the legacy DCI, determining that the base station sends the MC-DCI to the terminal on the first time unit;
in a case that the number of continuous slots for monitoring the DCI within the SS configuration cycle corresponding to the MC-DCI is greater than or equal to the number of continuous slots for monitoring the DCI within the SS configuration cycle corresponding to the legacy DCI, determining that the base station sends the legacy DCI to the terminal on the second time unit.

19. The method according to claim 13, wherein determining that the base station sends two of the MC-DCI and the legacy DCI to the terminal at least on the same time symbol based on the protocol agreement, comprises:
in response to determining that the terminal satisfies a first condition on the same time symbol, determining that the base station sends the MC-DCI to the terminal on the first time unit and sends the legacy DCI to the terminal on the second time unit.

20. The method according to claim 13, further comprising:
in response to determining that the terminal does not satisfy a first condition on the same time symbol, determining that the base station sends one of the MC-DCI and the legacy DCI to the terminal at least on the same time symbol.

21. The method according to claim 19 or 20, wherein the first condition comprises at least one of:
a number of DCI format configured for the terminal is within a capability range of monitoring PDCCH of the terminal;
a number of SS configured for the terminal is less than or equal to a first number;
a number of size of DCI configured for the terminal satisfies a preset restriction condition corresponding to the size;
a number of blind detection (BD) configured for the terminal is less than or equal to a second number;
a number of CCE configured for the terminal is less than or equal to a third number.

22. An information monitoring apparatus, wherein the apparatus is applied to a terminal and comprises:
a first determination module, configured to determine that at least one same time symbol exists between a first time unit and a second time unit; wherein the first time unit is used for the terminal to monitor multi-cell downlink control information (MC-DCI), and the second time unit is used for the terminal to monitor legacy DCI; and
a monitoring module, configured to monitor at least one of the MC-DCI and the legacy DCI at least on the same time symbol.

23. An information sending apparatus, wherein the apparatus is applied to a base station and comprises:
a second determination module, configured to determine that at least one same time symbol exists between a first time unit and a second time unit; wherein the first time unit is used for a terminal to monitor multi-cell downlink control information (MC-DCI), and the second time unit is used for the terminal to monitor legacy DCI; and
a third determination module, configured to determine to send at least one of the MC-DCI and the legacy DCI to the terminal at least on the same time symbol.

24. A computer-readable storage medium, wherein the storage medium stores a computer program, and the computer program is configured to execute the information monitoring method according to any one of claims 1-10.

25. A computer-readable storage medium, wherein the storage medium stores a computer program, and the computer program is configured to execute the information sending method according to any one of claims 11-21.

26. An information monitoring apparatus, comprising:
a processor; and
a memory configured to store instructions executable by the processor;
wherein the processor is configured to execute the information monitoring method according to any one of claims 1-10.

27. An information sending apparatus, comprising:
a processor; and
a memory configured to store instructions executable by the processor;
wherein the processor is configured to execute the information sending method according to any one of claims 11-21.
